# DEMANDE DE BREVET EUROPEEN

(11) **EP 4 728 856 A1**
(43) Date de publication de la demande: **22.04.2026**
(21) Numéro de dépôt: 25208462.9
(22) Date de dépôt: 14.10.2025
(51) Int. Cl.: A01K 1/01

(54) **APPAREIL DE RAMASSAGE EN PARTICULIER POUR LES EXCRÉMENTS ÉQUINS**

(30) Priorité: 16.10.2024 FR 2411208
(71) Demandeur: Societe Metallurgique Doreenne, 49600 Montrevault-sur-Èvre (FR)
(72) Inventeur: DAVID, Yann, 49600 MONTREVAULT-SUR-EVRE (FR)
(74) Mandataire: Cabinet Le Guen Maillet

(57) **Abrégé**

L'invention concerne un appareil de ramassage (100) comportant un châssis (104) prenant alternativement une position de ramassage et une position de vidange, un réservoir (106) présentant une ouverture (106a), et un rotor (108) mobile en rotation au niveau de l'ouverture (106a), où en position de ramassage, l'ouverture (106a) est orientée vers l'avant et le rotor (108) tourne dans un premier sens de rotation (109a) et où en position de vidange, l'ouverture (106a) est orientée vers le bas et le rotor (108) tourne dans un deuxième sens de rotation (109b), où le rotor (108) comporte un arbre (108c) mobile en rotation et une pluralité de lames (108b), et où chaque lame (108b) est souple et présente un bord proximal solidaire de l'arbre (108c) et un bord distal à l'opposé du bord proximal.

Avec un tel ensemble, le ramassage des excréments est facilité.

## Description

### DOMAINE TECHNIQUE

La présente invention concerne un appareil de ramassage, en particulier pour les excréments équins et assimilés tel que les ânes. L'invention concerne également un engin équipé d'un tel appareil de ramassage, ainsi qu'un procédé de ramassage et de vidange utilisant un tel appareil de ramassage.

### ÉTAT DE LA TECHNIQUE ANTÉRIEURE

Habituellement, les excréments qui sont laissés dans les bâtiments par les animaux, en particulier les chevaux, sont ramassés à la pelle. Ce travail est relativement pénible du fait des dimensions des bâtiments et de la surface de ramassage réduite de la pelle.

Il est donc nécessaire de trouver un arrangement particulier qui permet de faciliter le ramassage des excréments.

### EXPOSÉ DE L'INVENTION

Un objet de la présente invention est de proposer un appareil de ramassage avec un réservoir et un rotor qui tourne dans un sens pour remplir le réservoir avec les excréments et dans un sens inverse pour vider le réservoir.

À cet effet, est proposé un appareil de ramassage comportant :
- un châssis adapté à prendre alternativement une position de ramassage ou une position de vidange,
- un réservoir solidaire du châssis et présentant une ouverture, et
- un rotor monté mobile en rotation au niveau de l'ouverture et équipé d'un moteur arrangé pour entraîner le rotor alternativement dans un premier sens de rotation et un deuxième sens de rotation opposé audit premier sens de rotation,
où en position de ramassage, l'ouverture est orientée vers l'avant et le moteur entraîne le rotor dans le premier sens de rotation et où en position de vidange, l'ouverture est orientée vers le bas et le moteur entraîne le rotor dans le deuxième sens de rotation, où le rotor comporte un arbre monté mobile en rotation et une pluralité de lames et où chaque lame est souple et présente un bord proximal solidaire de l'arbre et un bord distal à l'opposé du bord proximal.

Avantageusement, pour chaque lame, les deux bords de ladite lame sont parallèles à l'axe de l'arbre.

Avantageusement, les bords distaux s'étendent vers l'avant au-delà de l'appareil de ramassage.

Avantageusement, la vitesse de rotation du rotor est comprise entre 900 tr/min et 1100 tr/min.

Avantageusement, le réservoir présente une trappe amovible.

Avantageusement, l'appareil de ramassage comporte des moyens d'appui fixés à l'avant du réservoir de manière à garantir la hauteur de l'ouverture.

L'invention propose également un engin comportant un appareil de ramassage selon l'une des variantes précédentes et un tracteur comportant des moyens de manœuvre auxquels le châssis est fixé et où les moyens de manœuvre déplacent le châssis alternativement de la position de ramassage à la position de vidange.

L'invention propose également un procédé de ramassage et de vidange de déchets à l'aide d'un appareil de ramassage selon l'une des variantes précédentes, ledit procédé comportant :
- placer le châssis en position de ramassage,
- activer le moteur pour faire tourner le rotor dans le premier sens, et
- déplacer l'appareil de ramassage vers l'avant,
lorsque le ramassage est terminé,
- désactiver le moteur pour arrêter le rotor,
- placer l'appareil de ramassage dans une zone de déchargement,
- placer le châssis en position de vidange, et
- activer le moteur pour faire tourner le rotor dans le deuxième sens jusqu'à vidange complète du réservoir sur la zone de déchargement.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un engin équipé d'un appareil de ramassage selon l'invention dans une position de ramassage,
Fig. 2 est une vue similaire à celle de la Fig. 1 dans une position de vidange de l'appareil de ramassage,
Fig. 3 est une vue en perspective de l'appareil de ramassage selon l'invention,
Fig. 4 est une vue en coupe par le plan médian vertical P de la Fig. 3 de l'appareil de ramassage dans la position de ramassage, et
Fig. 5 est une vue similaire à celle de la Fig. 4 pour la position de vidange de l'appareil de ramassage.

### EXPOSÉ DÉTAILLÉ DE MODES DE RÉALISATION

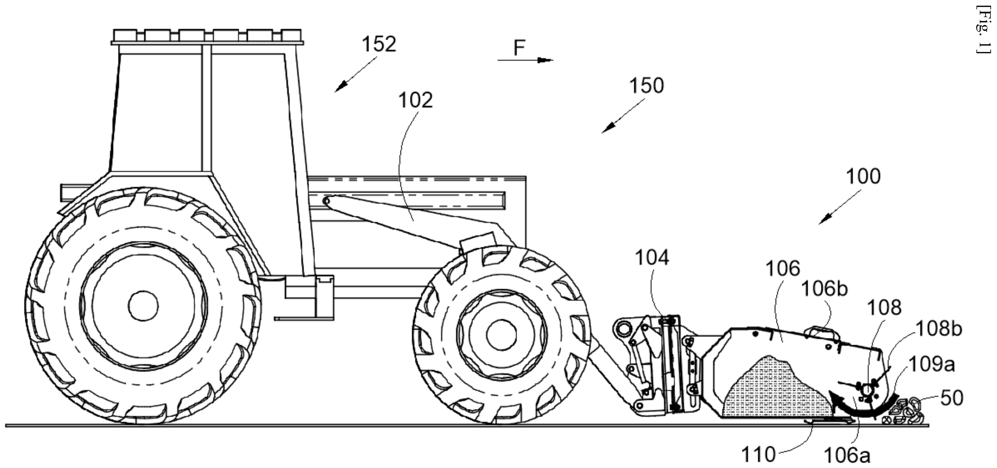

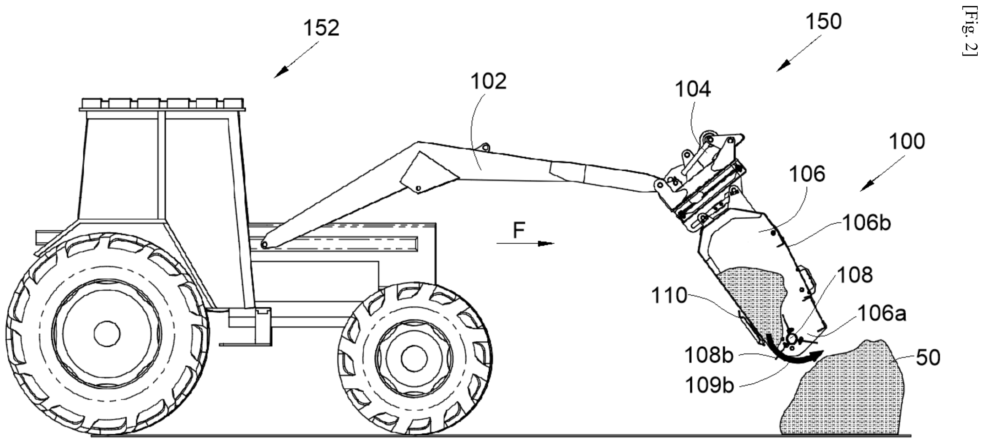

La Fig. 1 et la Fig. 2 montrent un engin 150 qui comporte un tracteur 152 avec des bras articulés 102 constituant des moyens de manœuvre 102 qui peuvent classiquement être mis alternativement en position basse (Fig. 1) et en position haute (Fig. 2). L'engin 150 comporte également un appareil de ramassage 100 selon l'invention qui comporte un châssis 102 fixé aux moyens de manœuvre 102.

Dans le mode de réalisation de l'invention présenté ici, l'appareil de ramassage 100 n'est pas autonome car il est fixé au tracteur 152, mais dans un autre mode de réalisation de l'invention non représenté, le tracteur 152 et les moyens de manœuvre 102 peuvent être intégrés à l'appareil de ramassage 100 qui devient alors autonome.

Ici, l'appareil de ramassage 100 est fixé aux moyens de manœuvre 102 par un attelage pouvant prendre toutes les formes connues de l'homme du métier.

Dans la description qui suit, les termes relatifs à une position sont pris en référence à un engin 150 en position d'avancement, c'est-à-dire comme il est représenté sur les Figs. 1 et 2, où la flèche F montre la direction d'avancement de l'engin 150.

La position basse des moyens de manœuvre 102 correspond à une position de ramassage de l'appareil de ramassage 100 et la position haute des moyens de manœuvre 102 correspond à une position de vidange de l'appareil de ramassage 100. Le châssis 104 est ainsi adapté à prendre alternativement la position de ramassage ou la position de vidange.

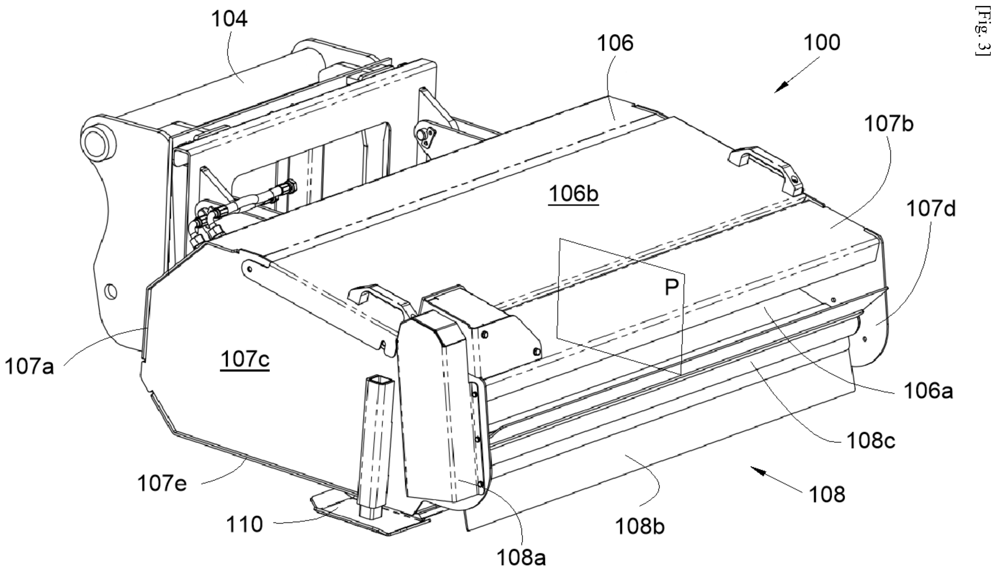

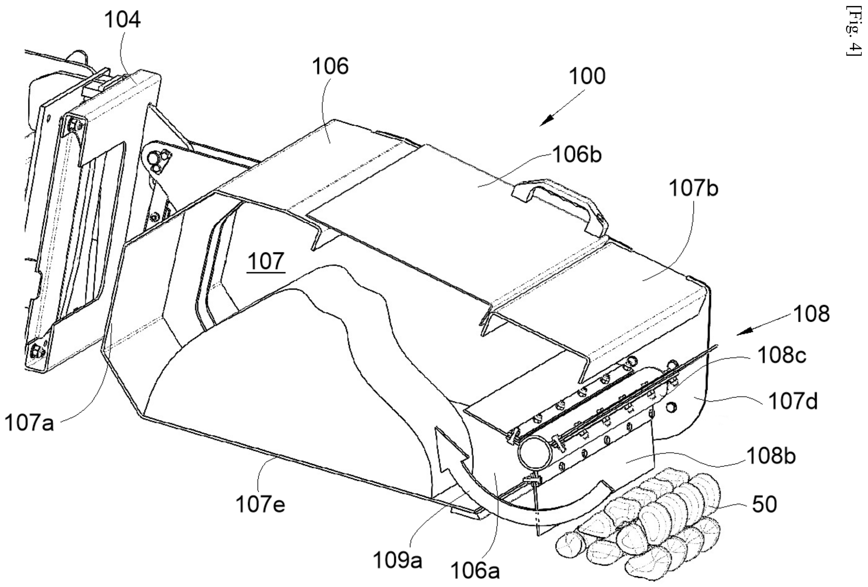

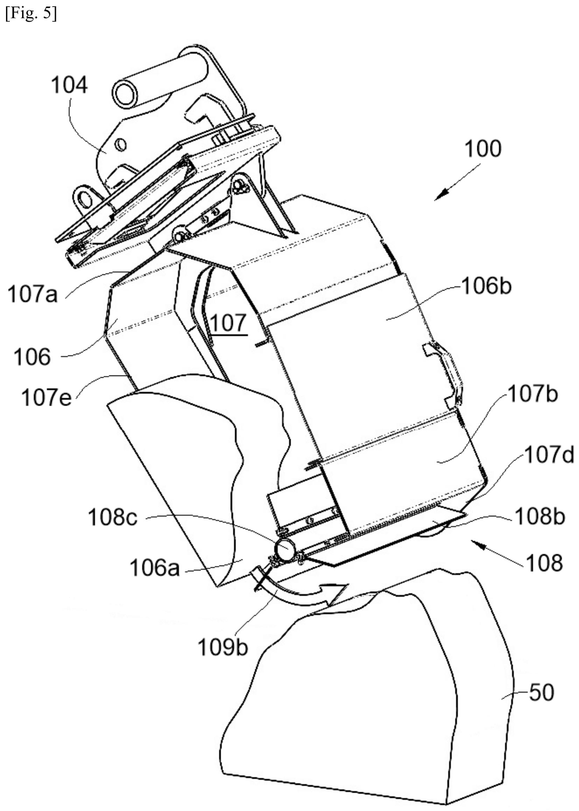

La Fig. 3 est une vue générale de l'appareil de ramassage 100 et les Figs. 4 et 5 montrent des agrandissements de l'appareil de ramassage 100 respectivement en position de ramassage et en position de vidange.

L'appareil de ramassage 100 comporte également un réservoir 106 qui est solidaire du châssis 104. Le réservoir 106 est constitué d'un ensemble de parois qui délimitent ensemble un volume intérieur 107, à cette fin, le réservoir 106 comporte une paroi arrière 107a, une paroi supérieure 107b, deux parois latérales 107c et 107d et une paroi inférieure 107e. La paroi arrière 107a est disposée du côté du tracteur 152 et en position de ramassage, la paroi inférieure 107e est contre le sol sur lequel sont déposés les déchets 50 à ramasser, en particulier du crottin.

À l'avant de l'appareil de ramassage 100, il n'y a pas de paroi frontale et le volume intérieur 107 est donc ouvert à cet endroit et le réservoir 106 présente ainsi une ouverture 106a qui est entre la paroi inférieure 107e et la paroi supérieure 107b.

À la place d'une paroi frontale, l'appareil de ramassage 100 comporte un rotor 108. Le rotor 108 est monté mobile en rotation au niveau de l'ouverture 106a et est équipé d'un moteur 108a qui entraîne le rotor 108 en rotation. Le moteur 108 est par exemple un moteur hydraulique alimenté par le système hydraulique du tracteur 152 et commandé depuis le poste de commande du tracteur 152.

Le moteur 108 est prévu pour pouvoir entraîner en rotation le rotor 108 alternativement dans un premier sens de rotation 109a et un deuxième sens de rotation 109b opposé audit premier sens de rotation 109a. Le rotor 108 est à l'avant de l'ouverture 106a.

En position de ramassage, l'ouverture 106a est orientée vers l'avant de manière à ce que les déchets 50 puissent rentrer dans le réservoir 106 par l'ouverture 106a. Pour aider les déchets 50 à rentrer, le moteur 108a entraîne le rotor 108 dans le premier sens de rotation 109a.

En position de vidange, l'ouverture 106a est orientée vers le bas pour aider les déchets 50 à sortir du réservoir par l'ouverture 106a et le moteur 108a entraîne alors le rotor 108 dans le deuxième sens de rotation 109b.

Dans le mode de réalisation de l'invention présenté ici, le rotor 108 comporte un arbre 108c qui est monté mobile en rotation et une pluralité de lames 108b, où chacune est souple et présente un bord proximal solidaire de l'arbre 108c et un bord distal qui est à l'opposé du bord proximal et qui frotte contre le sol lors de la rotation du rotor 108. L'utilisation de lames 108b souples à la place par exemple de brosses, facilite le ramassage du crottin qui est constitué de petites boules. Le premier sens de rotation 109a correspond à un sens où lorsque le bord distal d'une lame 108b frotte contre le sol, il se rapproche en même temps de la paroi inférieure 107e. À l'inverse, le deuxième sens de rotation 109b correspond à un sens où lorsque le bord distal d'une lame 108b frotte contre le sol, il s'éloigne en même temps de la paroi inférieure 107e.

Ici, le rotor 108 est monté mobile en rotation sur le réservoir 106 et plus particulièrement sur les parois latérales 107c-d.

La vidange du réservoir 106 s'effectue donc par gravité et par expulsion des déchets 50 sous l'effet des lames 108b en rotation.

Avec un tel arrangement, l'appareil de ramassage 100 est facile à réaliser et il est simple à utiliser car le ramassage et la vidange se font sans qu'il soit nécessaire d'ouvrir le réservoir 106, en outre il est possible de ramasser rapidement les déchets 50 dans tout un bâtiment.

Selon un mode de réalisation particulier, les lames 108b sont en polyuréthane. Les lames 108b s'étendent sur toute la largeur de l'ouverture 106a pour une plus grande surface de ramassage. Dans le mode de réalisation de l'invention, pour chaque lame 108b, les deux bords de ladite lame 108b sont parallèles à l'axe de l'arbre 108c. Chaque lame 108b prend ainsi la forme d'un rectangle.

Comme le montre plus clairement la Fig. 1, les bords distaux s'étendent vers l'avant au-delà de l'appareil de ramassage 100, ici au-delà du réservoir 106 et plus particulièrement ici des parois latérales 107c-d. Ainsi, lorsque l'appareil de ramassage 100 arrive face à un mur, les lames 108b viennent au plus près du mur pour ramasser les déchets 50 qui sont collés au mur.

Une vitesse de rotation du rotor 108 comprise entre 900 tr/min et 1100 tr/min permet un ramassage optimal et un broyage des déchets 50, en particulier des crottins. Les déchets 50 sont alors rejetés sous forme broyée pour faciliter le compostage et l'épandage.

Pour nettoyer l'intérieur du réservoir 106, celui-ci présente une trappe 106b qui est amovible et qui est ici agencée au niveau de la paroi supérieure 107b.

Pour garantir que la paroi inférieure 107e et donc l'ouverture 106a reste à la bonne distance du sol pour un ramassage optimisé des déchets 50, l'appareil de ramassage 100 comporte des moyens d'appui 110 qui sont fixés à l'avant du réservoir 106, ici sur les parois latérales 107c-d.

Les moyens d'appui 110 s'appuient sur le sol de manière à garantir la hauteur de l'ouverture 106a par rapport au sol. Les moyens d'appui 110 peuvent être des patins comme représentés ici ou des roues multidirectionnelles.

Un procédé de ramassage et de vidange des déchets 50 à l'aide de l'appareil de ramassage 100 décrit ci-dessus comporte les étapes de :
- placer le châssis 104 en position de ramassage à l'aide des moyens de manœuvre 102,
- activer le moteur 108 pour faire tourner le rotor 108 dans le premier sens 109a afin de ramasser les déchets 50, et
- déplacer l'appareil de ramassage 100 vers l'avant en déplaçant le tracteur 152 tout en maintenant la rotation du rotor 108.

Lorsque le ramassage est terminé, le procédé comporte les étapes de :
- désactiver le moteur 108 pour arrêter le rotor 108,
- placer l'appareil de ramassage 100 dans une zone de déchargement en déplaçant le tracteur 152,
- placer le châssis 104 en position de vidange à l'aide des moyens de manœuvre 102, et
- activer le moteur 108 pour faire tourner le rotor 108 dans le deuxième sens 109b jusqu'à vidange complète des déchets 50 du réservoir 106 sur la zone de déchargement.

## Revendications

1. Appareil de ramassage (100) comportant :
- un châssis (104) adapté à prendre alternativement une position de ramassage ou une position de vidange,
- un réservoir (106) solidaire du châssis (104) et présentant une ouverture (106a), et
- un rotor (108) monté mobile en rotation au niveau de l'ouverture (106a) et équipé d'un moteur (108a) arrangé pour entraîner le rotor (108) alternativement dans un premier sens de rotation (109a) et un deuxième sens de rotation (109b) opposé audit premier sens de rotation (109a),
où en position de ramassage, l'ouverture (106a) est orientée vers l'avant et le moteur (108a) entraîne le rotor (108) dans le premier sens de rotation (109a) et où en position de vidange, l'ouverture (106a) est orientée vers le bas et le moteur (108a) entraîne le rotor (108) dans le deuxième sens de rotation (109b), où le rotor (108) comporte un arbre (108c) monté mobile en rotation et une pluralité de lames (108b), et où chaque lame (108b) est souple et présente un bord proximal solidaire de l'arbre (108c) et un bord distal à l'opposé du bord proximal.

2. Appareil de ramassage (100) selon la revendication 1, **caractérisé en ce que** pour chaque lame (108b), les deux bords de ladite lame (108b) sont parallèles à l'axe de l'arbre (108c).

3. Appareil de ramassage (100) selon l'une des revendications 1 ou 2, **caractérisé en ce que** les bords distaux s'étendent vers l'avant au-delà de l'appareil de ramassage (100).

4. Appareil de ramassage (100) selon l'une des revendications 1 à 3, **caractérisé en ce que** la vitesse de rotation du rotor (108) est comprise entre 900 tr/min et 1100 tr/min.

5. Appareil de ramassage (100) selon l'une des revendications 1 à 4, **caractérisé en ce que** le réservoir (106) présente une trappe (106b) amovible.

6. Appareil de ramassage (100) selon l'une des revendications 1 à 5, **caractérisé en ce qu'**il comporte des moyens d'appui (110) fixés à l'avant du réservoir (106) de manière à garantir la hauteur de l'ouverture (106a).

7. Engin (150) comportant un appareil de ramassage (100) selon l'une des revendications précédentes et un tracteur (152) comportant des moyens de manœuvre (102) auxquels le châssis (102) est fixé et où les moyens de manœuvre (102) déplacent le châssis (104) alternativement de la position de ramassage à la position de vidange.

8. Procédé de ramassage et de vidange de déchets (50) à l'aide d'un appareil de ramassage (100) selon l'une des revendications 1 à 6, ledit procédé comportant :
- placer le châssis (104) en position de ramassage,
- activer le moteur (108) pour faire tourner le rotor (108) dans le premier sens (109a), et
- déplacer l'appareil de ramassage (100) vers l'avant,
lorsque le ramassage est terminé :
- désactiver le moteur (108) pour arrêter le rotor (108),
- placer l'appareil de ramassage (100) dans une zone de déchargement,
- placer le châssis (104) en position de vidange, et
- activer le moteur (108) pour faire tourner le rotor (108) dans le deuxième sens (109b) jusqu'à vidange complète du réservoir (106) sur la zone de déchargement.
